Europäisches Patentamt

European Patent Office

Office européen des brevets

(19)

(11) Veröffentlichungsnummer: **0 141 074**
**B1**

(12) **EUROPÄISCHE PATENTSCHRIFT**

(45) Veröffentlichungstag der Patentschrift:
**11.05.88**

(51) Int. Cl.⁴: **B 62 D  5/06**

(21) Anmeldenummer: **84109329.7**

(22) Anmeldetag: **07.08.84**

(54) **Hydrauliksystem mit einer Pumpe, einem Ventil, einer Zuführleitung und einer Signalleitung.**

(30) Priorität: **12.08.83 US 522933**

(43) Veröffentlichungstag der Anmeldung:
**15.05.85 Patentblatt 85/20**

(45) Bekanntmachung des Hinweises auf die Patenterteilung:
**11.05.88 Patentblatt 88/19**

(84) Benannte Vertragsstaaten:
**AT BE CH DE FR GB IT LI NL SE**

(56) Entgegenhaltungen:
**EP - A - 0 061 005**
**US - A - 4 034 563**
**US - A - 4 343 151**

(73) Patentinhaber: **DEERE & COMPANY, 1 John Deere Road,
Moline Illinois 61265 (US)**

(72) Erfinder: **Miller, James Anton, 1727 Four Winds Drive,
Cedar Falls Iowa 50613 (US)**
Erfinder: **Eagles, Derek Malcolm, 107 Rebecca Road,
Hudson Iowa 50643 (US)**

(74) Vertreter: **Feldmann, Bernhard et al, DEERE &
COMPANY European Office, Patent Department
Steubenstrasse 36-42 Postfach 503,
D-6800 Mannheim 1 (DE)**

## Beschreibung

Die Erfindung bezieht sich auf ein Hydrauliksystem mit einer Pumpe, die als bedarfsabhängig geregelte Pumpe ausgebildet ist, einem Ventil zum Steuern des Zuflusses zu einem Verbaucher, einer Zuführleitung und einer Signalleitung, die zum Steuern der Pumpe an diese angeschlossen ist, wobei Zuführleitung und Signalleitung bei aus seiner Neutralstellung verschobenem Ventil mit der Druckseite des Verbrauchers verbunden sind.

Bei einem derartigen Hydrauliksystem (US-A-4 343 151) dient der Primärkreis vorzugsweise zum Beaufschlagen einer hydrostatischen Lenkung, bei der sich das Ventil bei nichtbewegtem Lenkrad in seiner Neutralstellung befindet, in der der Zulauf zum bevorzugten Verbraucher unterbrochen ist. Befindet sich das Ventil aber in einer seiner Arbeitsstellungen, in der ein Beaufschlagen des Verbrauchers über die Pumpe erfolgt, so kann es vorkommen, daß im Falle der Lenkung die Räder beim Einschlagen auf ein Hindernis treffen und damit im Verbraucher eine Gegenkraft auslösen, die größer ist als der Pumpendruck. Dadurch entsteht im Hydrauliksystem ein Rückfluß, der das Lenkrad für die Bedienungsperson ganz unerwartet plötzlich zurückdreht. Wegen der damit verbundenen Gefahren ist dies natürlich unerwünscht.

Die mit der Erfindung zu lösende Aufgabe wird darin gesehen, bei den Pumpendruck übersteigenden Gegendrücken am Verbraucher einen Rückfluß zu vermeiden.

Diese Aufgabe ist gemäß der Erfindung dadurch gelöst worden, daß die Signalleitung blockierbar ist, sobald der in ihr herrschende Druck größer ist als der über die Zuführleitung zum Verbraucher gelieferte. Auf diese Weise wird, wenn das Ventil beispielsweise durch ein Drehen des Lenkrades in eine Stellung verbracht wurde, in der die Pumpe mit dem Verbraucher über die Zuführleitung und die Signalleitung verbunden ist, die Signalleitung sofort blokkiert, sobald an dem Verbraucher eine Kraft wirkt, die größer ist als der Pumpendruck. Damit wird ein eventuell auftretender Rückdruck sofort in der Signalleitung aufgefangen und kann keine schädlichen Wirkungen entfalten.

Hier ist nach der Erfindung die Zuführleitung an die Pumpe angeschlossen. Im einzelnen ist erfindungsgemäß, wenn bei einem Hydrauliksystem in der Signalleitung ein Steuerventil vorgesehen ist, das Steuerventil über den Druck in der Zuführleitung, verstellbar und bei einem Druck in der Signalleitung, der größer ist als der Druck in der Zuführleitung, in eine erste Stellung verstellbar ist, in der die Verbindung der Signalleitung zwischen Pumpe und dem Ventil unterbrochen ist. Somit kann der Rückdruck über ein zwischengeschaltetes Steuerventil aufgefangen werden.

Zweckmäßig ist die bedarfsabhängig geregelte Pumpe eine Druck und Flüssigkeit kontrollierte Pumpe mit variabler Fördermenge.

Für ein Hydrauliksystem, wobei das Ventil Teil eines Primärkreises ist, ein Sekundärkreis vorgesehen ist, das Ventil mit einer Rücklaufleitung versehen ist, die Signalleitung über eine weitere Leitung mit der einen Seite eines Vorrangventils verbunden ist und wobei in der weiteren Leitung stromabwärts des Steuerventils eine Blende und ein zum Vorrangventil parallel geschaltetes Überströmventil angeordnet sind, wird nach der Erfindung vorgeschlagen, daß die Pumpe über eine weitere Zuführleitung mit dem Vorrangventil verbunden ist, das aus einer geschlossenen Stellung über den Pilotdruck der weiteren Zuführleitung stromaufwärts des Vorrangventils in eine offene, die Pumpe mit dem Sekundärkreis bzw. mit einem im Sekundärkreis befindlichen Stellventil verbindende Stellung verstellbar ist, wobei das Stellventil stromabwärts des Steuerventils über eine weitere Signalleitung mit der ei sten Signalleitung verbunden ist, an der Verbindungsstelle beider Signalleitungen ein Doppelrückschlagventil vorgesehen ist und die weitere Leitung stromaufwärts der Verbindungsstelle an die Signalleitung angeschlossen ist. Somit kann sowohl vom Primärkreis als auch vom Sekundärkreis über die Signalleitungen an die Pumpe ein Befehl gegeben werden, auf Grund dessen ihre Arbeitsweise kontrollierbar ist. Hinzu kommt, daß über die Verbindung durch die weitere Leitung das Vorrangventil mit der Pumpe zusammenwirkt, um sicherzustellen, daß auch bei zugeschaltetem Sekundärverbraucher der vorrangige Verbraucher mit einer ausreichenden Flüssigkeitsmenge und entsprechendem Druck versorgt wird.

Vorteilhaft ist, daß das Steuerventil in seiner ersten Stellung die Zuführleitung mit dem Abschnitt der Signalleitung zwischen Steuerventil und Pumpe verbindet.

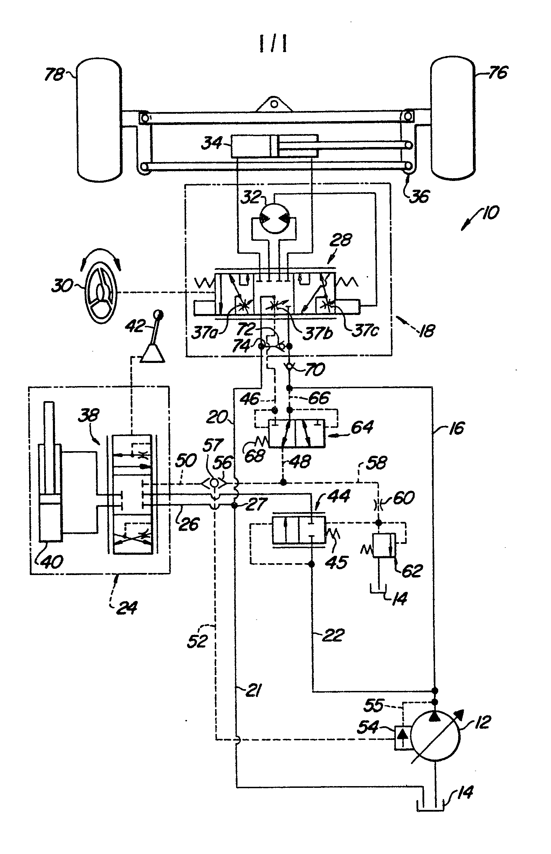

In der Zeichnung ist ein nachfolgend näher erläutertes Hydrauliksystem mit Lastfühler dargestellt.

Dieses Hydrauliksystem ist in seiner Gesamtheit mit 10 bezeichnet und dient primär zum Steuern der Lenkung eines Kraft- oder Arbeitsfahrzeuges, insbesondere eines Ackerschleppers oder einer Baumaschine. Natürlich ist der Einsatz nicht auf die Steuerung der Lenkung begrenzt, da auch andere Aggregate anstelle der Lenkung zum Beispiel zum Betätigen einer Bremse oder einer Differentialsperre Verwendung finden können. Nur werden diese Aggregate immer bevorzugt mit Druckflüssigkeit versorgt. Im einzelnen weist das Hydrauliksystem 10 eine Pumpe 12 mit veränderlicher Fördermenge auf, die Flüssigkeit aus einem Sammelbehälter 14 ansaugt und unter Druck stehende Flüssigkeit über eine Zuführleitung 16 an einem bevorzugten Arbeitskreis 18 abgeben kann. Drucklose oder Rücklaufflüssigkeit gelangt über Rücklaufleitungen 20, 21 zurück zum Sammelbehälter 14. Die Pumpe 12 kann ferner noch über eine zweite Zuführleitung 22 einen Sekundärkreis 24 versorgen, der über eine Leitung 26, die an einer Verbindungsstelle 27 in die Rücklaufleitung 21 mündet, mit dem Sammelbehälter 14 in Verbindung steht.

Der bevorzugte Arbeitskreis 18 genießt immer Priorität, das heißt, sein Verbraucher wird bei Bedarf immer bevorzugt mit unter Druck stehender Flüssigkeit versorgt, damit seine Funktion auch bei druckbeaufschlagtem Verbraucher im Sekundärkreis stets gewährleistet ist. Im dargestellten Ausführungsbeispiel ist der Arbeitskreis 18 mit einem Steuerventil 28 versehen, das über ein von Hand betätigbares Lenkrad 30 und einen durch Flüssigkeit aktivierten Drehkörper 32 oder dergleichen verstellbar ist und das Druckflüssigkeit den beiden Enden eines Hydraulikzylinders 34 zuführen kann, der dann ein Lenkgestänge 36 entsprechend verstellt. In der Zeichnung sind die Verbindungsleitungen zwischen Steuerventil 28, Hydraulikzylinder 34 und Drehkörper 32 sowie die Verbindung zwischen Hydraulikzylinder und Lenkgestänge 36 schematisch dargestellt. Die Funktion entspricht der üblichen. Zu erwähnen bleibt lediglich, daß das als Dreistellungsventil ausgebildete Steuerventil 28 mit drei vorzugsweise verstellbaren Blenden 37a, b und c versehen ist, die zum Dosieren des Flüssigkeitsdurchflusses dienen.

In dem Sekundärkreis 24 ist ein Stellventil 38 vorgesehen, das über Leitungen mit den beiden Enden eines weiteren Hydraulikzylinders 40 verbunden ist. Dieser kann vielen Anwendungen dienen. Eine davon wäre das Anheben und Absenken eines an das Fahrzeug anbaubaren Gerätes. Vorzugsweise ist das Stellventil 38 über einen Hebelmechanismus 42 verstellbar. Es kann aus einer Neutralstellung in jeweils zwei Endstellungen verstellt werden, in denen dann jeweils ein Ende des weiteren Hydraulikzylinders 40 mit der Pump 12 und das andere Ende mit dem Sammelbehälter 14 verbunden sein kann.

Ein Vorrangventil 44 ist in der zweiten Zuführleitung 22 vorgesehen und zwischen einer offenen und einer geschlossenen Stellung verschiebbar. Es dient zum Steuern des Flüssigkeitsdruckes zu dem bevorzugten Arbeitskreis 18 durch Drosseln des Flüssigkeitsflusses von der Pumpe 12 zum Sekundärkreis 24, sofern der Arbeitskreis 18 benötigt wird. Über eine Feder 45, die an seiner rechten Seite angreift, wird das Vorrangventil 44 in Richtung auf seine geschlossene Stellung gedrückt. Dabei wird der Zufluß zum Sekundärkreis 24 zunächst gedrosselt und schließlich ganz unterbrochen. An der der Feder 45 abgelegenen linken Seite des Vorrangventils 44 ist eine Pilotleitung angeschlossen, die anderenends stromaufwärts des Vorrangventils an die zweite Zuführleitung 22 angeschlossen ist, so daß der Druck in der Zuführleitung 22 vor dem Vorrangventil auf dessen linke Seite wirkt und bestrebt ist, das Vorrangventil 44 in seine offene Stellung zu verstellen, in der der Zufluß zum Sekundärkreis 24 ungedrosselt oder nur geringfügig gedrosselt erfolgt.

Das Hydrauliksystem ist mit Signalleitungen 46, 48, 50 und 52 versehen. Von diesen verbinden die Signalleitungen 46 und 48 den Arbeitskreis 18 und die Signalleitung 50 den Sekundärkreis 24 jeweils über die Signalleitung 52 mit einem Kompensator 54. Letzterer ist mit der Pumpe 12 verbunden und dient zum Steuern des Pumpenhubes auf der Basis der Druckdifferenz zwischen der Zuführleitung 16 und der Signalleitung 52. Hierzu wird der Druck in der Zuführleitung 16 über eine Fühlleitung 55 zu dem Kompensator 54 geleitet. Durch Verändern des Pumpenhubes wird die von der Pumpe 12 gelieferte Flüssigkeitsmenge reguliert. Über die Signalleitungen 46, 48, 50 und 52 können Drucksignale, die von den auf die Hydraulikzylinder 34 und 40 einwirkenden Lasten ausgehen, auf den Kompensator 54 übertragen werden, der daraufhin den Flüssigkeitsmengenausstoß der Pumpe 12 entsprechend reguliert. Um zu ermöglichen, daß der Druck, der von dem Kompensator 54 ermittelt wird, der höhere Druck ist, der in dem Arbeitskreis 18 und dem Sekundärkreis herrscht, ist ein Doppelrückschlagventil 56 an einer Verbindungsstelle 57 vorgesehen, an der die Signalleitungen 48, 50 und 52 ineinander münden.

An die Signalleitung 48 ist eine weitere Signalleitung 58 angeschlossen, die anderenends mit der rechten Seite des Vorrangventils 44 verbunden ist, so daß an dieser Seite der in der Signalleitung 58 herrschende Druck ansteht, der zusammen mit der Kraft der Feder 45 bestrebt ist, das Vorrangventil 44 nach links in Richtung auf seine geschlossene Stellung zu verschieben. Damit wirken der Druck in der Signalleitung 58 sowie die Kraft der Feder 45 mit der Pumpe 12 zusammen, um den Flüssigkeitsfluß zu dem Sekundärkreis 24 zu regulieren. Dies gewährleistet, daß ausreichend viel Flüssigkeit und Druck von der Pumpe 12 dem bevorzugten Arbeitskreis 18 zur Verfügung gestellt wird. In der Signalleitung 58 sind noch eine Blende 60 zum Dosieren der Flüssigkeit und ein Überströmventil 62 vorgesehen. Letzteres ist stromabwärts der Blende 60 angeordnet, zu dem Vorrangventil parallel geschaltet und wird durch eine Feder in seiner geschlossenen Stellung gehalten, so daß es über den Flüssigkeitsdruck stomabwärts der Blende 60 in eine Offenstellung gebracht werden kann, in der dann Flüssigkeit in den Sammelbehälter 14 gelangen kann. Damit öffnet das Überströmventil 62 nur in Abhängigkeit von einem vorgegebenen Wert und die überströmende Flüssigkeit kann wieder verwendet werden.

Bei derartigen bevorzugten Arbeitskreisen für eine Lenkung kann, wenn ein Rückdruck, der größer ist als der Pumpendruck am Hydraulikzylinder 34, und ein Rückfluß durch den Drehkörper 32 in Kombination auftreten, es vorkommen, daß eine Drehkraft erzeugt wird, die das Lenkrad 30 ruckartig in einem Drehsinn dreht, der dem von der Bedienungsperson gewählten entgegengesetzt ist. Dadurch muß die Lenkstellung wieder berichtigt werden. Beides ist unerwünscht. Dies wird im vorliegenden Fall unter anderem durch ein Signalsteuerventil 64 vermieden, das die Signalleitungen 46 und 48 miteinander verbindet und über eine Zwischenleitung 66 an die Zuführleitung 16 angeschlossen ist. Es ist als Dreiwege-Zweistellungsventil ausgebildet und kann durch die Kraft einer Feder 68 und dem Druck in der Signalleitung 46, die das Steuerventil 28 und das Signalsteuerventil 64 miteinander verbindet und über einen Abzweig mit der linken Seite des Signalsteuerventils 64 verbunden ist, in einer ersten in der Zeichnung gezeigten Stellung gehalten werden, in der die Zuführleitung 16 über die Zwischenleitung 66 mit der Signalleitung 48 verbunden ist. Von der Zwischenleitung 66 führt noch ein weiterer Abzweig zu der rechten Seite des Signalsteuerventils 64, so daß dieses über den in der Zuführleitung 16 und der Zwischenleitung 66 herrschenden Druck in eine zweite Stellung nach links verschoben werden kann, in der das Steuerventil 28 mit der rechten Seite des Vorrangventils 44 über die Signalleitungen 46, 48 und 58 und über die Signalleitungen 46, 48 und 52 mit dem Kompensator 54 verbunden ist.

Das Signalsteuerventil 64 kann auf Druckänderungen der Flüssigkeit in der ersten Zuführleitung 16 und in der Signalleitung 46 ansprechen und kann aufgrund solcher Druckänderungen einen Flüssigkeitsrückfluß aus dem 1. Arbeitskreis 18 verhindern, wenn der Flüssigkeitsdruck in der Zuführleitung 16 geringer ist als der Flüssigkeitsdruck in der Signalleitung 46 oder wenn eine äußere Stellkraft auf den Hydraulikzylinder 34 einwirkt, die größer ist als der dort herrschende Flüssigkeitsdruck. Dadurch, daß ein Flüssigkeitsfluß aus dem Steuerventil 28 verhindert wird, eliminiert man diesen Flüssigkeitsweg für Rückflüssigkeisfluß durch den Drehkörper 32 und damit ein Zurückdrehen des Lenkrades 30.

In dem Hydrauliksystem 10 ist ferner noch ein Rückschlagventil 70 vorgesehen, das in dem Leitungsstück der Zuführleitung 16 angeordnet ist, das das Steuerventil 28 mit der Anschlußstelle der Zwischenleitung 66 verbindet. Dieses Rückschlagventil 70 ist so angeordnet, daß es einen Rückfluß der Flüssigkeit aus dem Steuerventil 28 bzw. dem 1. Arbeiskreis durch die erste Zuführleitung 16 verhindert. Damit wirken das Signalsteuerventil 64 und das Rückschlagventil 70 zusammen, um das selbsttätige Zurückdrehen des Lenkrades und die Berichtigung der Lenkstellung am Lenkrad 30 zu vermeiden.

Ein weiteres Rückschlagventil 72 ist in einer Leitung 74 vorgesehen, die die Zuführleitung 16 mit der Rücklaufleitung 20 verbindet. Das Rückschlagventil 72 ist dabei so angeordnet, daß es einen Flüssigkeitsfluß von der Rücklaufleitung 20 zu der ersten Zuführleitung 16 erlaubt, sofern aufgrund der Drehung am Lenkrad 30 ein größerer Flüssigkeitsbedarf erforderlich wird, als er von der Pumpe 12 geliefert werden kann. Sollte dies auftreten, beispielsweise wenn der Motor bei abgeschlepptem Fahrzeug stillsteht, so wird Flüssigkeit, die normalerweise in den Sammelbehälter zurückströmt, dazu verwendet, die Zuführleitung 16 aufzufüllen, so daß in dieser keine Kavitation auftritt.

Ist ein Sekundärkreis nicht erforderlich, so kann auch auf das Vorrangventil 44 verzichtet werden.

Rechte und linke Räder sind mit 76 und 78 bezeichnet und mit dem Lenkgestänge 36 verbunden.

Arbeitsweise

In der nachfolgenden Erläuterung des Hydrauliksystems 10 werden Drücke angegeben, bei denen die verschiedenen Ventile ansprechen. Diese Werte sind rein hypothetisch, und die Erfindung soll durch diese Werte nicht eingeengt werden.

Bei nicht laufendem Motor des Kraftfahrzeuges wird die Pumpe 12 nicht angetrieben. Das Steuerventil 28 befindet sich dabei in seiner in der Zeichnung wiedergegebenen Neutralstellung, der Hydraulikzylinder 34 ist nicht druckbeaufschlagt, und das Vorrangventil 44 befindet sich in seiner dargestellten und geschlossenen Stellung und das Signalventil 64 in seiner ersten Stellung, die in der Zeichnung dargestellt ist. Sobald nun der Motor angelassen wird, wird die Pumpe 12 angetrieben und bei größtem Pumpenhub über die Zuführleitung 16 Flüssigkeit zu dem Steuerventil 28 fördern. Befindet sich dieses dann aber noch in seiner Neutralstellung, so wird der Flüssigkeitsfluß hier blockiert und der Flüssigkeitsdruck in der Zuführleitung 16 wird ansteigen. Gleichzeitig werden die rechte und linke Seite des Vorrangventils 44 und die rechte Seite des Signalsteuerventils 64 mit diesem Druck beaufschlagt, der aber noch nicht groß genug ist, um das Vorrangventil 44 und das Signalsteuerventil 64 aus ihren in der Zeichnung wiedergegebenen Stellungen zu verschieben. Unterstellt man, daß zum Zusammenschieben der Feder 68 am Signalsteuerventil 64 ein Druck von 50 psi (3,4 bar) erforderlich ist, so wird sich das Signalsteuerventil 64 in seine zweite Stellung verschieben, wenn der Druck in der Leitung 16 auf über 50 psi (3,4 bar) ansteigt. Dieser Druck reicht aber noch nicht aus, um die Kraft der Feder 45 am Vorrangventil 44 zu überwinden, so daß dieses dann noch in seiner ersten Stellung verbleibt. Erreicht nun der Druck im Hydrauliksystem 10 einen Wert, der etwas über 50 psi (3,4 bar) liegt, so verschiebt sich das Signalsteuerventil 64 in seine zweite Stellung und unterbricht dabei die Verbindung zwischen der Zwischenleitung 66 und der Signalleitung 48 und verbindet stattdessen die Signalleitung 48 mit der Signalleitung 46 und dem Steuerventil 28, so daß der Druck in der Signalleitung 48 sich abbaut, da nunmehr über die Blende 37b eine Verbindung zu den Rücklaufleitungen 20 und 21 und damit zum Sammelbehälter 14 geschaffen ist. Bei diesen Bedingungen befindet sich das Vorrangventil 44 immer noch in seiner ersten Stellung, da zum Überwinden der Kraft der Feder 45 ein Druck von etwa 150 psi (10,3 bar) erforderlich ist. Steigt nun der Druck auf einen Wert von etwas über 150 psi (10,3 bar), so wird der am linken Ende des Vorrangventils 44 über die Pilotleitung sich aufbauende Druck die Kraft der Feder 45 überwinden und das Vorrangventil 44 in Richtung seiner zweiten oder offenen Stellung verschieben, bis schließlich die Pumpe 12 auch über die zweite Zuführleitung 22 zu dem Sekundärkreis 24 fördert. Befindet sich aber jetzt das Stellventil 38 noch in seiner gezeigten Neutralstellung, so kann kein Druck zu dem Hydraulikzylinder 40 von der Pumpe 12 gelangen. Vielmehr ist die zweite Zuführleitung 22 durch das Stellventil 38 blockiert, wie auch die Signalleitung 50 und die 4. Leitung 26. Steigt nun der Druck bei weiterarbeitender Pumpe 12 auf 300 psi (20,7 bar) an und unterstellt man, daß der Kompensator 54 bei 300 psi (20,7 bar) anspricht und die Pumpe dann auf Nullförderung geht, so wird dieser Druck gehalten und nicht mehr weiter ansteigen. Das Hydrauliksystem 10 befindet sich jetzt in Bereitschaftsstellung.

Lenkbetätigung bei normalen Bedingungen

Unterstellt man ferner, daß sich das Stellventil 38 noch in seiner Neutralstellung befindet, am bevorzugten Arbeitskreis 18 infolge Betätigung des Lenkrades 30 aber ein Flüssigkeitsbedarf entsteht, wobei in der Bereitschaftsstellung Flüssigkeit sowohl zum Steuerventil 28 als auch zum Stellventil 38 geleitet wird, das Signalsteuerventil 64 sich aber noch in seiner zweiten Stellung befindet, so wird sich das Steuerventil 28 aus seiner Neutralstellung in eine seiner Endstellungen verschieben, je nachdem, ob eine Rechts- oder eine Linkskurve zu durchfahren ist. Für eine Rechtskurve – also einem Radeinschlag nach rechts – wird das Lenkrad 30 im Uhrzeigerdrehsinn gedreht, und das Steuerventil 28 wird sich nach rechts in seine linke Endstellung verschieben. Dadurch wird die Zuführleitung 16 über die Blende 37a im Steuerventil 28 mit der linken Seite des Drehkörpers 32 und mit der Signalleitung 46 verbunden, die dann nicht mehr mit den Rücklaufleitungen 20 und 21 in Verbindung steht. Da sich das Vorrangventil 64 dann noch in seiner zweiten Stellung befindet, entsteht auch eine Verbindung der Zuführleitung 16 über die Signalleitungen 46, 48 und 52 mit dem Kompensator 54, so daß die Pumpe 12 ihre Förderung wieder aufnimmt. Wird die linke Seite des Drehkörpers mit der Zuführleitung 16 verbunden, so wird seine rechte Seite über das Steuerventil 28 mit dem kolbenseitigen Ende des Hydraulikzylinders 34 verbunden und diese Seite druckbeaufschlagen. Das zylinderseitige Ende des Hydraulikzylinders ist dann über das Steuerventil 28 mit den Rücklaufleitungen 20 und 21 und somit mit dem Sammelbehälter 14 verbunden. Die Blenden 37a und 37c sind in den Zuflußkanälen zu dem Drehkörper 32 vorgesehen, wobei hinter den Blenden oder stromabwärts zu diesen Verbindungskanäle in die Zuflußkanäle münden, die anderenends zur Pumpenseite offen sind. Geht man davon aus, daß zum Verstellen des Hydraulikzylinders 34 und damit der Räder 76 und 78 ein Druck von 900 psi (62 bar) erforderlich ist, so muß sich zunächst der Druck der Pumpe 12 vom Bereitschaftsdruck von 300 psi (20,7 bar) auf 900 psi (62 bar) erhöhen, damit eine Lenkwirkung eintritt. Solange der Druck den Wert von 900 psi (62 bar) nicht erreicht, tritt keine Verstellung des Kolbens im Hydraulikzylinder 34 ein und die Druckflüssigkeit strömt über die Blende 37a und die Signalleitung 46 zum Überströmventil 62 und gleichzeitig zum linken Ende des Signalsteuerventils 64. Der sich dort aufbauende Druck wird infolge der Blende 37a geringer sein als der an der rechten Seite des Signalsteuerventils, aber aufgrund der Feder 68 das Signalsteuerventil 64 nach rechts in seine erste dargestellte Stellung zurückstellen, in der dann der Durchfluß im Signalsteuerventil 64 von der Signalleitung 46 zur Signalleitung 48 unterbrochen, aber eine Verbindung im Signalsteuerventil 64 von der Zwischenleitung 66 zur Zwischenleitung 48 hergestellt ist.

Sobald die Zwischenleitung 66 mit der Signalleitung 48 verbunden ist, steht der Druck aus der Zuführleitung 16 auch am Kompensator 54 an und die Pumpe 12 kann auf volle Förderleistung gehen. Die Pumpe 12 wird unter Druck stehende Flüssigkeit zu dem Hydraulikzylinder 34 weiter unter ansteigendem Druck fördern, bis der Druckabfall an der Blende 37a den hypothetischen Wert von 300 psi (20,7 bar) erreicht. Zu diesem Zeitpunkt wird der Druck in der Zuführleitung 16 etwa 1200 psi (82,7 bar) (900 psi [62 bar] plus 300 psi [20,7 bar]) betragen. Gleichzeitig wird darauf verwiesen, daß während des Druckanstiegs auf 1200 psi (82,7 bar) neben dem Signalsteuerventil 64 sich auch das Vorrangventil 44 in seine zweite Stellung verschoben hat. Dies hängt mit den Druckabfällen an den Blenden zusammen. Hat der Druck einen Wert von 1200 psi (82,7 bar) erreicht, so wird die Pumpe 12 fortfahren, die erforderliche Druckflüssigkeit zum Lenken der Räder 76 und 78 zu liefern, solange am Lenkrad noch gedreht wird. Sobald mit der Drehbewegung am Lenkrad aufgehört wird, kehrt das Steuerventil 28 in seine Neutralstellung zurück, und die Signalleitung 46 ist über die Blende 37a im Steuerventil 28 mit den Rücklaufleitungen 20, 21 und dem Sammelbehälter 21 verbunden. Dadurch entsteht auch eine Verbindung der Signalleitung 52 mit dem Sammelbehälter 14. Die Signalleitung 52 wird damit drucklos und der Kompensator 54 kann die Druckänderung zwischen der Zuführleitung 16 und der Signalleitung 52 über die Fühlleitung 55 ermitteln und die Pumpe 12 in ihre Bereitschaftsstellung zurückführen.

Lenkung, wenn eine äußere Kraft auf beide oder eines der Räder einwirkt.

Beim Fahren in einer Rinne oder dergleichen kann es vorkommen, daß beim Lenkeinschlag auf mindestens eines der Räder eine äußere Kraft dadurch einwirkt, daß das Rad gegen die Rinnenwand schlägt. Diese Kraft kann dann der Lenkbewegung entgegengesetzt sein und den Hydraulikzylinder 34 bzw. seinen Kolben gegen den Pumpendruck verstellen. Wären nach der Erfindung keine besonderen Vorkehrungen hiergegen getroffen, so würde sich der Kolben dann in eine dem Pumpendruck entgegengesetzte Richtung bewegen, d.h. die unter Druck stehende Flüssigkeit würde entgegengesetzt bewegt und dadurch den Drehkörper 32 in entgegengesetzter Richtung und damit auch das an diesem angreifende Lenkrad 30 bewegen. Dadurch entsteht die bereits vorerwähnte Lenkradrückdrehung, die plötzlich und in der Regel unerwartet auftritt und damit die Bedienungsperson überrascht. Je nach den auftretenden Kräften, kann die Bedienungsperson diese Lenkradrückdrehung nicht verhindern, auch wenn sie das Lenkrad 30 mit aller Kraft festhält. Die dadurch entstehenden Gefahren sind offensichtlich.

Bei der erfindungsgemäßen Ausführunsform wird diese Lenkradrückdrehung vermieden. Bei einer Drehung des Lenkrades 30 im Uhrzeigerdrehsinn für eine Fahrtrichtungsänderung nach rechts ist die Zuführleitung 16, wie es vorstehend bereits ausgeführt wurde, über die Blende 37a im Steuerventil 28 mit dem Drehkörper 32 und dem Hydraulikzylinder 34 verbunden, so daß dessen kolbenseitiges Ende mit unter Druck stehender Flüssigkeit beaufschlagt wird, während sein zylinderseitiges Ende über das Steuerventil 28 mit den Rücklaufleitungen 20, 21 und damit mit dem Sammelbehälter 14 verbunden ist. Trifft nun eines der Räder 76 oder 78 auf ein Hindernis auf, das eine Gegenkraft erzeugt und das einschlagende Rad und damit den Kolben im Hydraulikzylinder 34 zurückstellen will, so entsteht im Drehkörper und in der Zuführleitung 16 sowie in der Signalleitung 46 ein Rückdruck. In der Zuführleitung 16 wird dieser Rückdruck durch das Rückschlagventil 70 aufgefangen. In der Signalleitung 46 bewirkt der Rückdruck ein sofortiges Verschieben des Signalsteuerventils 64 in seine erste und gezeigte Position, so daß die Verbindung mit der rechten Seite des Vorrangventils 44 hier unterbrochen wird. Die rechte Seite ist dann wieder an die Zwischenleitung 58 angeschlossen. Das sofortige Verstellen des Si-

gnalsteuerventils 64 wird dadurch bewirkt, daß der Rückdruck infolge der besonderen Anordnung der Blende 37a in die Signalleitung 46 ungedrosselt eintritt. Da das Rückschlagventil 70 stromabwärts der Zwischenleitung 66 vorgesehen ist, kann sich der Rückdruck nicht bis zum rechten Ende des Signalsteuerventils 64 fortpflanzen, so daß an der linken Seite des Signalsteuerventils eine Druckerhöhung auftritt, die zusammen mit der Kraft der Feder 68 das Signalsteuerventil 64 in seine erste Stellung verstellt und damit die Signalleitung 46 blockiert. Damit ist ein Flüssigkeitsrückfluß unterbunden, der unter Umständen den Drehkörper 32 hätte zurückdrehen können. Somit verbleibt der Drehkörper trotz einer auf eines der Räder einwirkenden Kraft in seiner jeweiligen Stellung und eine Lenkradrückdrehung ist ausgeschlossen.

Auch wenn das Rückschlagventil 70 nicht oder an anderer Stelle vorgesehen wäre, würden bei einem Rückdruck in der Zuführleitung 16 und in der Signalleitung 46 unterschiedliche Drücke herrschen, da der Rückdruck in der Zuführleitung 16 noch durch die Blende 37a gedrosselt wird, in der Signalleitung 46 jedoch nicht.

Sobald der Rückdruck nicht mehr existent ist, wird die weitere Funktion, wie sie unter «Lenkbetätigung bei normalen Bedingungen» beschrieben wurde, eintreten, und zwar von der Stelle, an der das Signalsteuerventil 64 gerade nach rechts verschoben wurde und die Zuführleitung 16 über die Zwischenleitung 66 und die Signalleitungen 48 und 52 mit dem Kompensator 54 verbunden ist.

Arbeitsweise bei Prioritätsfluß

Soll eine Lenkbetätigung ausgeführt werden, wenn der Sekundärkreis 24 bzw. sein Hydraulikzylinder 40 druckbeaufschlagt ist, so treten folgende Abläufe ein unter der Voraussetzung, daß das Stellventil 38 aus seiner Neutralstellung in eine seiner Endstellungen verstellt wurde und das Signalsteuerventil 64 sich in seiner 2. Stellung befindet und daß das Vorrangventil 44 offen ist. Damit ist die Pumpe 12 über das Vorrangventil 44 mit beispielsweise dem kolbenseitigen Ende des Hydraulikzylinders verbunden, während dessen zylinderseitiges Ende über die Leitung 26 und die Rücklaufleitung 21 an den Sammelbehälter angeschlossen ist. In dem Stellventil 38 ist der Zufluß zum Hydraulikzylinder gedrosselt, wobei stromabwärts hinter der Drossel ein Abzweigkanal vorgesehen ist, der in den entsprechenden Zulaufstellungen mit der Signalleitung 50 in Verbindung steht. Damit kann sich bei aus seiner Neutralstellung verschobenem Stellventil 38 in der Signalleitung 52 und damit am Kompensator 54 ein die Pumpe 12 in Arbeitsstellung verstellender Druck aufbauen, da die Kugel des Doppelrückschlagventils 56 die Signalleitung 48 verschließt. In Arbeitsstellung der Pumpe wird der Druck von dem Bereitschaftsdruck von 300 psi (20,7 bar) auf den zum Verstellen des Kolbens im Hydraulikzylinder 40 erforderlichen Druck von etwa 800 psi (55,1 bar) erhöht. Wird nun ein Lenkeinschlag der Räder 76 und 78 beispielsweise nach rechts erforderlich, so wird das Lenkrad 30 im Uhrzeigerdrehsinn gedreht, damit das Steuerventil 28 nach rechts in seine linke Endstellung verstellt und das kolbenseitige Ende des Hydraulikzylinders 34 über die Blende 37a mit der Zuführleitung 16 verbunden. Gleichzeitig ist die Signalleitung 46 wieder an die Zuführleitung 16 angeschlossen. Zu diesem Zeitpunkt liefert die Pumpe 12 einen Druck von etwa 800 psi (55,1 bar), wohingegen zumindest 900 psi (62 bar) zum Verstellen der Räder 76 und 78 erforderlich sind. Da aber nun an der linken Seite des Signalsteuerventils 64 wieder ein Druck ansteht, wird sich das Signalsteuerventil 64 unter der zusätzlichen Kraft der Feder 68 in seine gezeigte Stellung nach rechts verschieben und der Druck in der Zuführleitung 16 wird über die Zwischenleitung 66, das Signalsteuerventil 64, die Signalleitung 48 und die Signalleitung 52 an dem Kompensator 54 anstehen. Da in dem Stellventil 38 die Drossel vorgesehen ist, wird in der Signalleitung 50 ein geringerer Druck herrschen als in der Signalleitung 48, so daß die Kugel des Doppelrückschlagventils 56 die Signalleitung 50 blockieren kann. Außerdem wird der Druck in der Zuführleitung 16 bei dieser Stellung des Signalsteuerventils 64 über die Zwischenleitung 66, das Signalsteuerventil 64, die Signalleitungen 48 und 58 an der rechten Seite des Vorrangventils 44 anstehen, allerdings vermindert um die Verluste, die durch die Blende 60 entstehen. Dennoch wird sich dann das Vorrangventil 44 infolge der Kraft der Feder 45 in Richtung auf seine geschlossene Stellung bewegen und den Zufluß zu dem Sekundärkreis 24 zunächst drosseln. Dabei erhält die Pumpe 12 noch ein Eingangssignal von 800 psi (55,1 bar) und wird bei vollem Pumpenhub weiterarbeiten. Während der Linksverschiebung des Vorrangventils 44 tritt eine Drosselung auf, die einen Druckverlust am Vorrangventil jedoch einen Druckanstieg in den Zuführleitungen 16 und 22 bedeutet. Wenn der Druck etwa 900 psi (62 bar) beträgt, wird das Vorrangventil 44 ganz geschlossen sein. Sobald der Druck in der Zuführleitung auf über 950 psi (65,5 bar) ansteigt, wird sich das Signalsteuerventil 64 wieder in seine zweite Stellung verstellen. Ein Druck von etwa 1050 psi (72,4 bar) in der Zuführleitung 16 enspricht 900 psi (62 bar), die von der Last an der Lenkung kommen, stromabwärts der Blende 37a in den Signalleitungen 46, 48 und 58. Dieser wiederum wirkt auf die rechte Seite des Vorrangventils 44 zuzüglich der Kraft der Feder 45, deren Druck 150 psi (10,3 bar) entspricht. Solange, wie die Bedienungsperson fortfährt, das Lenkrad 30 nach rechts zu drehen, werden diese Bedingungen aufrechterhalten.

In dem Augenblick, in dem mit der Lenkraddrehung aufgehört wird, wird das Steuerventil 28 in seine Neutralstellung zurückgeführt und die Flüssigkeit in den Sinalleitungen 46, 48 und 58 wird durch die Blende 37b und die Rücklaufleitungen 20 und 21 in den Sammelbehälter 14 zurückgelangen. Dabei wird der Druck in diesen Leitungen auf etwa Null abfallen. Dieser Druckabfall bewirkt, daß die Kugel des Doppelrückschlagventils 56 wieder nach rechts bewegt wird und die Signalleitung 48 verschließt. Infolge des Druckabfalls in der Signalleitung 58 kann das Vorrangventil 44 wieder nach rechts verschoben werden in Richtung seiner Offenstellung aufgrund des Druckes in der zweiten Zuführleitung 22. Sobald das Vorrangventil 44 öffnet, wird die Drosselung reduziert und Flüssigkeit mit einem Druck von 800 psi (55,1 bar) kann zu dem Sekundärkreis 24 gelangen. Zur gleichen Zeit wird der Druck der Pumpe 12 auf 800 psi (55,1 bar) reduziert, da die vorgenannte Drosselung in dem Vorrangventil 44 abgebaut wurde.

**Patentansprüche**

1. Hydrauliksystem (10) mit einer Pumpe (12), die als bedarfsabhängig geregelte Pumpe (power on demand) ausgebildet ist, einem Ventil (28) zum Steuern des Zuflusses zu einem Verbraucher (34), einer Zuführleitung (16) und einer Signalleitung (46, 48, 52), die zum Steuern der Pumpe an diese angeschlossen ist, wobei Zuführleitung (16) und Signalleitung (46, 48, 52) bei aus seiner Neutralstellung verschobenem Ventil (28) mit der Druckseite des Verbrauchers verbunden sind, dadurch gekennzeichnet, daß die Signalleitung (46, 48, 52) blockierbar ist, sobald der in ihr herrschende Druck größer ist als der über die Zuführleitung (16) zum Verbraucher (34) gelieferte.

2. Hydrauliksystem nach Anspruch 1, dadurch gekennzeichnet, daß die Zuführleitung (16) an die Pumpe (12) angeschlossen ist.

3. Hydrauliksystem nach Anspruch 1 oder 2 mit einem Steuerventil (64) in der Signalleitung (46, 48, 52), dadurch gekennzeichnet, daß das Steuerventil (64) über den Druck in der Zuführleitung (16) verstellbar ist und bei einem Druck in der Signalleitung (46, 48, 52), der größer ist als der Druck in der Zuführleitung (16), in eine erste Stellung verstellbar ist, in der die Verbindung der Signalleitung (46, 48, 52) zwischen Pumpe (12) und dem Ventil (28) unterbrochen ist.

4. Hydrauliksystem nach einem oder mehreren der vorherigen Ansprüche, dadurch gekennzeichnet, daß die bedarfsabhängig geregelte Pumpe (12) eine Druck und Flüssigkeit kontrollierte Pumpe mit variabler Fördermenge ist.

5. Hydrauliksystem nach einem oder mehreren der vorherigen Ansprüche, wobei das Ventil (28) Teil eines Primärkreises (18) ist, ein Sekundärkreis (24) vorgesehen ist, das Ventil (28) mit einer Rücklaufleitung (21) versehen ist, die Signalleitung (46, 48, 52) über eine weitere Leitung (58) mit der einen Seite eines Vorrangventils (44) verbunden ist und wobei in der weiteren Leitung (58) stromabwärts des Steuerventils (64) eine Blende (60) und ein zum Vorrangventil (44) parallel geschaltetes Überströmventil (62) angeordnet sind, dadurch gekennzeichnet, daß die Pumpe (12) über eine weitere Zuführleitung (22) mit dem Vorrangventil (44) verbunden ist, das aus einer geschlossenen Stellung über den Pilotdruck der weiteren Zuführleitung (22) stromaufwärts des Vorrangventils (44) in eine offene, die Pumpe (12) mit dem Sekundärkreis (24) bzw. mit einem im Sekundärkreis (24) befindlichen Stellventil (38) verbindende Stellung verstellbar ist, wobei das Stellventil (38) stromabwärts des Steuerventils (64) über eine weitere Signalleitung (50) mit der ersten Signalleitung (46, 48, 52) verbunden ist, an der Verbindungsstelle (57) beider Signalleitungen ein Doppelrückschlagventil (56) vorgesehen ist und die weitere Leitung (58) stromaufwärts der Verbindungsstelle (57) an die Signalleitung (46, 48, 52) angeschlossen ist.

6. Hydrauliksystem nach Anspruch 5, wobei in der ersten Zuführleitung (16) ein Rückschlagventil (70) vorgesehen ist, dadurch gekennzeichnet, daß das Steuerventil (64) in seiner ersten Stellung die Zuführleitung (16) mit dem Abschnitt der Signalleitung (46, 48, 52) zwischen Steuerventil (64) und Pumpe (12) verbindet.

**Claims**

1. Hydraulic system (10) with a pump (12), which is designed as a need-dependent regulated pump (power on demand), a valve (28) for controlling the delivery to a consumer unit (34), a delivery pipe (16) and a signal pipe (46, 48, 52), which is connected to the pump for controlling the latter, with the delivery pipe (16) and signal pipe (46, 48, 52) being connected with the pressure side of the consumer unit when the valve (28) is moved from its neutral position, characterised by the fact that the singal pipe (46, 48, 52) can be blocked as soon as the pressure prevailing in it is greater than that delivered tot he consumer unit (34) via the delivery pipe (16).

2. Hydraulic system as per claim 1, characterised by the fact that the delivery pipe (16) is connected to the pump (12).

3. Hydraulic system as per claim 1 or 2 with a control valve (64) in the signal pipe (46, 48, 52), characterised by the fact that the control valve (64) can be moved through the pressure in the delivery pipe (16) and, with a pressure in the signal pipe (46, 48, 52) which is greater than the pressure in the delivery pipe (16), can be moved into a first position in which the connection of the signal pipe (46, 48, 52) is interrupted between the pump (12) and the valve (28).

4. Hydraulic system as per one or more of the previous claims, characterised by the fact that the need-dependent regulated pump (12) is a pressure and fluid controlled pump with variable output.

5. Hydraulic system as per one or more of the previous claims, where the valve (28) is part of a primary circuit (18), a secondary circuit (24) is provided, the valve (28) is provided with a return pipe (21), the signal pipe (46, 48, 52) is connected via a further pipe (58) with one side of a priority valve (44) and where downstream of the control valve (64) a shutter (60) and an overflow valve (62) connected in parallel with the priority valve (44) are fitted in the further pipe (58), characterised by the fact that the pump (12) is connected via a further delivery pipe (22) with the priority valve (44), which can be moved from a closed position through the pilot pressure of the further delivery pipe (22) upstream of the priority valve (44) into an open position connecting the pump (12) with the secondary circuit (24) or with an adjustment valve (38) located in the secondary circuit, where the adjustment valve (38) is connected downstream of the control valve (64) via a further signal pipe (50) with the first signal pipe (46, 48, 52), and at the junction point (57) of the two signal pipes a double backpressure valve (56) is provided and the further pipe (58) is connected upstream of the junction point (57) to the signal pipe (46, 48, 52).

6. Hydraulic system as per claim 5, where a backpressure valve (70) is provided in the first delivery pipe (16), characterised by the fact that the control valve (64) in its first position connects the delivery pipe (16) with the section of the signal pipe (46, 48, 52) between the control valve (64) and pump (12).

## Revendications

1. – Système hydraulique (10) comportant une pompe (12) se présentant sous la forme d'une pompe à réglage en fonction des besoins, une valve (28) pour commander l'écoulement vers un appareil utilisateur (34), un conduit d'alimentation (16) et un conduit de signaux (46, 48, 52) qui, pour la commande de la pompe, est raccordé à celle-ci, le conduit d'alimentation (16) et le conduit de signaux (46, 48, 52) étant, lorsque la valve (28) est écartée de sa position neutre, réliés au côté haute pression de l'appareil utilisateur, caractérisé en ce que le conduit de signaux (46, 48, 52) peut être bloqué, dès que la pression qui y règne est supérieure à celle fournie à l'appareil utilisateur par l'intermédiaire du conduit d'alimentation (16).

2. – Système hydraulique suivant la renvendication 1, caractérisé en ce que le conduit d'alimentation (16) est raccordé à la pompe (12).

3. – Système hydraulique suivant le revendication 1 ou 2, comportant une valve de commande (64) montée dans le conduit de signaux (46, 48, 52), caractérisé en ce que la valve de commande (64) est déplaçable par la pression régnant dans le conduit d'alimentation (16) et peut être amenée, lors d'une pression dans le conduit de signaux (46, 48, 52) supérieure à la pression dans le conduit d'alimentation (16), dans une première position dans laquelle la communication du conduit de signaux (46, 48, 52) entre la pompe (12) et la valve (28) est interrompue.

4. – Système hydraulique suivant une ou plusieurs des revendications précédentes, caractérisé en ce que la pompe (12) à réglage en fonction des besoins est une pompe à contrôle de pression et de liquide, avec débit variable.

5. – Système hydraulique suivant une ou plusieurs des revendications précédentes, dans lequel la valve (28) fait partie d'un circuit primaire (18), dans lequel il est prévu une circuit secondaire (24), dans lequel la valve (28) est munie d'un conduit de retour (21), dans lequel le conduit de signaux (46, 48, 52) est relié par l'intermédiaire d'un autre conduit (58) à un côté d'une valve prioritaire (44), et dans lequel il est prévu dans l'autre conduit (58), en aval de la valve de commande (64), un orifice formant diaphragme ou d'étranglement (60) et une soupape de trop-plein (62) montée en parallèle avec la valve prioritaire (44), caractérisé en ce que la pompe (12) est reliée par l'intermédiaire d'un autre conduit d'alimentation (22) à la valve prioritaire (44), qui peut être déplacée depuis une position fermée, par l'intermédiaire de la pression pilote de l'autre conduit d'alimentation (22) en amont de la valve prioritaire (44), jusque dans une position ouverte reliant la pompe (12) au circuit secondaire (24) ou à une valve de réglage (38) montée dans le circuit secondaire (24), la valve de réglage (38) étant reliée an aval de la valve de commande (64), par l'intermédiaire d'un autre conduit de signaux (50), au premier conduit de signaux (46, 48, 52), un double clapet de retenue (56) étant prévu au point de liaison (57) entre les deux conduits de signaux et l'autre conduit (58) étant raccordé au conduit de signaux (46, 48, 52) en amont de ce point de liaison (57).

6. – Système hydraulique suivant la revendication 5, dans lequel un clapet de retenue (70) est prévu dans le premier conduit d'alimentation (16) caractérisé en ce que la valve de commande (64) relie dans sa première position le conduit d'alimentation (16) au tronçon du conduit de signaux (46, 48, 52) compris entre la valve de commande (64) et la pompe (12).

0 141 074

1 / 1

9